# FASCICULE DE BREVET EUROPEEN

(11) **EP 1 242 279 B1**
(45) Date de publication et mention de la délivrance du brevet: **07.01.2004**
(21) Numéro de dépôt: 00990085.3
(22) Date de dépôt: 20.12.2000
(51) Int. Cl.: B64C 39/02, B64C 31/036, B64D 47/08

(54) **APPAREIL VOLANT RADIOCOMMANDE DE TAILLE REDUITE**
KLEINGEBAUTES FUNKGESTEUERTES LUFTFAHRZEUG
SMALL-SIZE RADIO-CONTROLLED FLYING DEVICE

(30) Priorité: 22.12.1999 FR 9916260
(43) Date de publication de la demande: 25.09.2002
(73) Titulaire: Institut de Recherche pour le Développement ( IRD), 75010 Paris (FR)
(72) Inventeur: ASSELINE, Jean, F-34830 Clapiers (FR); DE NONI, George, F-34830 Clapiers (FR)
(74) Mandataire: Michelet, Alain
(86) Numéro de dépôt international: PCT/FR2000/003618
(87) Numéro de publication internationale: WO 2001/046009

(56) Documents cités:
- DE-U- 8 800 297
- US-A- 4 601 443
- US-A- 4 934 630
- US-A- 5 160 100
- US-A- 5 620 153
- MESSINGER M: ""Remote" control" UNMANNED SYSTEMS, vol. 12, no. 3, 1994, pages 31-32, XP000912240 USA
- PATENT ABSTRACTS OF JAPAN vol. 1999, no. 08, 30 juin 1999 (1999-06-30) & JP 11 059595 A (MUGEN:KK), 2 mars 1999 (1999-03-02)
- PATENT ABSTRACTS OF JAPAN vol. 1998, no. 04, 31 mars 1998 (1998-03-31) & JP 09 315393 A (NISSAN MOTOR CO LTD), 9 décembre 1997 (1997-12-09)

## Description

La présente invention concerne un appareil volant radiocommandé de taille réduite destiné à transporter et à utiliser du matériel de télédétection aérienne. Elle a des applications dans le domaine de la géologie, l'agronomie, la géographie, la pédologie, l'hydrologie ou plus généralement la connaissance des milieux et des sociétés et la prévention des risques de dégradation de l'environnement.

La télédétection par images satellitaires dans le visible ou dans d'autres bandes a connu un essor rapide. Cependant, malgré l'augmentation considérable de la résolution, il est toujours nécessaire de disposer d'images à haute définition des sites que l'on analyse, soit que l'image satellite ait fourni un indice que l'on cherche à confirmer, soit pour corréler les informations provenant de ces deux types de sources.

A cette fin, on utilise des moyens volants du type avion, hélicoptère, voire dirigeables circulants à des altitudes moindres que les satellites et transportant du matériel de télédétection. Cependant, ces moyens présentent un certain nombre d'inconvénients. Ils sont en particulier d'un coût d'utilisation très important, doivent être mis en oeuvre par un personnel spécialisé et ils sont soumis aux contraintes administratives régissant la circulation des aéronefs : autorisation de vol, survol...

Il est ainsi souhaitable de disposer de moyens aériens d'un coût d'utilisation réduit et qui puissent être mis en oeuvre par un personnel non ou relativement peu spécialisé. Il a ainsi été proposé d'utiliser des modèles réduits d'avion, d'hélicoptère ou de dirigeables télécommandés. Si de tels modèles sont maintenant disponibles dans le commerce pour un coût relativement modique et les moyens radio au point, il n'en reste pas moins qu'ils ne sont pas particulièrement adaptés aux transports d'une charge et en particulier de matériel de télédétection. En fait, ces modèles sont relativement fragiles, soumis à des vibrations importantes, d'une autonomie réduite et d'un pilotage nécessitant une formation conséquente et spécialisée.

Toutefois, les aéronefs radiocommandés de petite taille, en plus du coût réduit de mise en oeuvre, présentent l'avantage d'absence de contrainte administrative ou très réduite quant à leurs évolutions. En particulier, en France, la hauteur maximale de vol est limitée à 150 m, ce qui est suffisant pour l'application envisagée et plusieurs fréquences radio pour la télécommande sont disponibles.

La présente invention propose donc d'utiliser les avantages de l'aéromodélisme : coût réduit, contraintes administratives d'utilisation faibles, simplicité de mise en oeuvre et sécurité pour les opérateurs en proposant un dispositif qui permette le transport d'une charge de quelques kilos, tout en assurant une bonne sécurité du matériel embarqué et ne nécessitant pour le pilotage que quelques heures de formation.

Ainsi, la présente invention concerne un appareil volant radiocommandé de taille réduite propulsé par un moteur thermique à hélice propulsive pour transport et utilisation de matériel de télédétection, ledit appareil permettant un décollage et un atterrissage courts par roulage au sol et permettant un vol à une vitesse maximale de 35 Km/h. Le document JP-A- 11059595 montre un tel appareil.

Selon l'invention l'appareil comporte une nacelle et une voilure :
- la nacelle étant un chariot tricycle rigide de gabarit approximativement pyramidal à base arrière et sommet avant, plan inférieur, deux plans latéraux et un plan supérieur, la base étant un élément monobloc soudé et comportant le moteur, l'hélice, un réservoir et la radiocommande, le sommet étant un élément monobloc soudé, le plan inférieur et les deux plans latéraux comportant des longerons au moins assemblés à la base et au sommet, le plan inférieur comportant à ses trois angles d'extrémités deux roues arrière et une roue avant, la roue avant étant disposée débordante vers l'avant dans le sommet et les roues étant des pneumatiques basse pression, la nacelle étant désassemblable par désemboîtement pour permettre le transport dudit appareil sous un volume réduit, en arrière la base pouvant être désolidarisée des longerons et en avant les longerons pouvant être désolidarisés du sommet et les roues étant démontables ;
- la voilure étant un parachute souple à caisson comportant un bord d'attaque avec écope et des bordures arrière, ladite voilure étant reliée à la nacelle par deux suspentes avant et deux suspentes freins agissant sur les bordures arrière.

Dans divers modes de mise en oeuvre de l'invention, les moyens suivants utilisés seuls ou selon toutes leurs combinaisons techniquement possibles sont mis en oeuvre :
- chacun des plans latéraux comporte un longeron supérieur, ledit longeron étant courbé sensiblement vers son extrémité antérieure et comportant une fixation de voilure par suspente avant et au moins une fixation de matériel, la fixation de voilure étant coulissante pour permettre la variation de l'assiette de l'appareil en fonction du matériel transporté ;
- au moins les longerons sont en ZICRAL® ;
- l'assemblage est réalisé par boulons et écrous papillons ;
- l'assemblage est réalisé par boulons et écrous papillons comportant un moyen de freinage NYLSTOP® ;
- la voilure est reliée à la nacelle par les deux suspentes avant d'une manière amovible rapide ;
- le moyen amovible rapide est un mousquet ;
- le moteur est un moteur 2 temps de cylindrée comprise entre 10 et 50 cm³ ;
- l'hélice est bipale et a un diamètre compris entre 30 et 50 cm ;
- l'hélice est disposée dans un carter de protection ;
- la voilure à une surface comprise entre 2 et 6 m² ;
- l'appareil est caractérisé par les paramètres approximatifs suivants :
   masse totale maximale de 5,5 kg pour une voilure de 2,4 m² et
   de 7 kg pour une voilure de 3,8 m² ;
   masse à vide maximale de 4,8 kg réservoir plein ;
   roues de diamètre 150 mm ;
   gabarit de la cellule : hauteur à la base 620 mm, largeur à la base 650 mm, distance base sommet 750 mm ;
   le moteur est un moteur 2 temps de 23 cm³ à allumage électronique et démarrage manuel par lanceur à corde avec carburateur à membrane et à admission à clapet par le carter ;
      - la radiocommande comporte au moins une commande de gaz agissant sur la vitesse du moteur et deux commandes treuil agissant sur les deux suspentes freins ;
      - la fixation de matériel est du type pendulaire à amortissement des mouvements antéro-postérieurs et latéraux ;
      - la fixation de matériel comporte un premier tube support antéro-postérieur monté mobile en rotation autour de son axe à chacune de ses deux extrémités sur un support transversal solidaire de la nacelle, la rotation du premier tube support étant amortie par un premier amortisseur hydraulique solidaire d'un longeron, au moins un élément de matériel étant suspendu par un tube de suspension monté à fourche et pendulaire sur le premier tube support, le pendule formé par le tube de suspension étant en outre amorti par un second amortisseur hydraulique solidaire du premier tube support ;
      - au moins un support transversal est fixé sur les longerons supérieurs ;
      - au moins un support transversal est fixé sur la base ;
      - les deux supports transversaux sont fixés sur les longerons supérieurs ;
      - au moins deux éléments de matériel sont suspendus par deux tubes de suspension et au moins un bras de liaison articulé relie lesdits deux tubes de suspension au second amortisseur afin de réaliser un quadrilatère plan déformable ;
      - le quadrilatère est un parallélogramme ;
      - le premier tube support comporte des orifices de montage disposés sur sa longueur afin de pouvoir sélectionner la position de montage de la fourche du tube de suspension le long dudit premier tube support ;
      - le bras de liaison comporte des orifices de montage disposés sur sa longueur afin de pouvoir sélectionner la position de l'articulation au tube de suspension le long dudit bras de liaison ;
      - trois éléments de matériel sont suspendus par trois tubes de suspension ;
      - les éléments sont choisis parmi les appareils de photographie, caméscope, caméra, capteurs optiques ;
      - les supports transversaux sont fixés sur la nacelle par l'intermédiaire d'amortisseurs du type silentblocs ;
      - une poignée butée est fixée en arrière et en haut de la base de la nacelle.

La présente invention sera mieux comprise à la lecture de la description d'un premier exemple de mise en oeuvre où :
- la figure 1 représente une première nacelle vue latéralement ;
- la figure 2 représente la première nacelle vue de dessus;
- la figure 3 représente la première nacelle vue de face ;
- la figure 4 représente la voilure et,
d'un second exemple de mise en oeuvre où :
- la figure 5 représente une seconde nacelle vue latéralement ;
- la figure 6 représente la seconde nacelle vue en perspective.

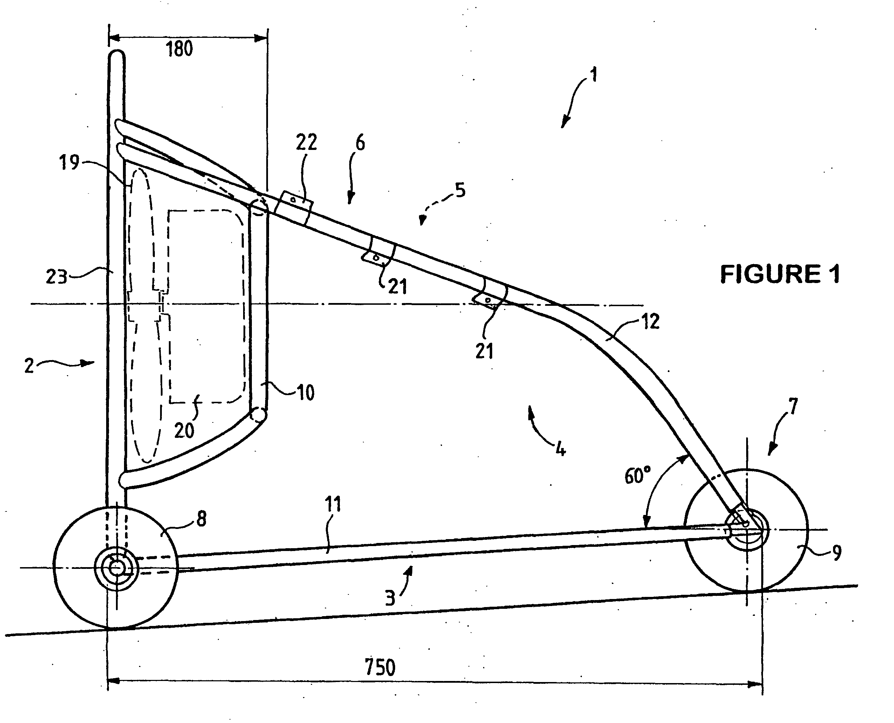

Sur la figure 1, la nacelle 1 vue latéralement permet de distinguer une base 2 vers l'arrière et un sommet 7 vers l'avant. Entre la base 2 et le sommet 7 sont disposés des longerons définissant un gabarit général en forme de pyramide arrière et sommet en avant. Le gabarit pyramidal comporte un plan inférieur 3, un plan supérieur 6 et deux plans latéraux 4 et 5. Le plan inférieur 3 est limité latéralement par deux longerons inférieurs 11, le plan supérieur 6 est limité latéralement par deux longerons supérieurs 12. La base 2 comporte un support de moteur 10, le bloc moteur 20 et l'hélice 19 étant représentés en pointillés. Le support de moteur 10 est également utilisé pour maintenir les éléments accessoires, réservoirs, matériel radioélectrique... Des moyens d'amortissement des vibrations sont prévus : blocs de caoutchouc, mousse... afin de protéger les éléments mécaniques et électroniques des vibrations. Ces divers éléments sont ainsi placés dans une zone relativement protégée car comprise entre la base formée d'un arceau 23 et le support de moteur 10. L'arceau 23 assure également une protection des utilisateurs vis à vis de l'hélice 19.

Aux trois sommets du plan inférieur 3 sont disposées deux roues arrière 8 et une roue avant 9. La roue avant 9 est plus particulièrement disposée dans le sommet 7. Les roues arrière sont démontables grâce à des boulons. La roue avant 9 peut également être démontable mais le sommet étant également démontable, on peut, pour le transport de l'appareil démonté, laisser la roue avant 9 sur le sommet 7.

Les longerons supérieurs 12 sont cintrés vers leur partie antérieure et comportent chacun une fixation de voilure 22 qui est coulissante ainsi que deux fixations de matériel 21. La fixation de voilure 22 coulissante est destinée à recevoir une des deux suspentes de la voilure par l'intermédiaire d'un élément d'accrochage rapide, par exemple un mousquet, permettant ainsi la mise en place ou le retrait rapide de la voilure sur la nacelle. Le coulissement de la fixation de voilure 22 le long des deux longerons supérieurs 12 permet d'ajuster le point de fixation de la suspente en fonction de la répartition et du poids du matériel transporté pour ajuster l'assiette de la nacelle 1. Une fois cette position déterminée, la fixation de voilure 22 est maintenue en place par tout moyen et par exemple par boulons et écrous papillons freinés. La nacelle 1 est démontable, l'assemblage de la nacelle 1 étant obtenue par emboîtement des éléments entre eux et maintien par boulons et écrous papillons freinés. En particulier, les longerons supérieurs 12 et les longerons inférieurs 11 peuvent être désemboîtés du sommet 7 vers l'avant et de la base 2 vers l'arrière. La zone d'emboîtement/désemboîtement des longerons sur la base peut être directement au niveau de la base ou en un point situé le long des longerons à distance de la base. Ce point sera préférentiellement disposé pour être compris dans l'épaisseur définie par les plans de la base 2 et du support de moteur 10 afin que la base, une fois démontée, n'occupe pas une épaisseur supérieure à celle du support moteur 10. Dans une autre forme de l'invention il est envisagé que le démontage puisse être effectué par pliage des éléments entre eux.

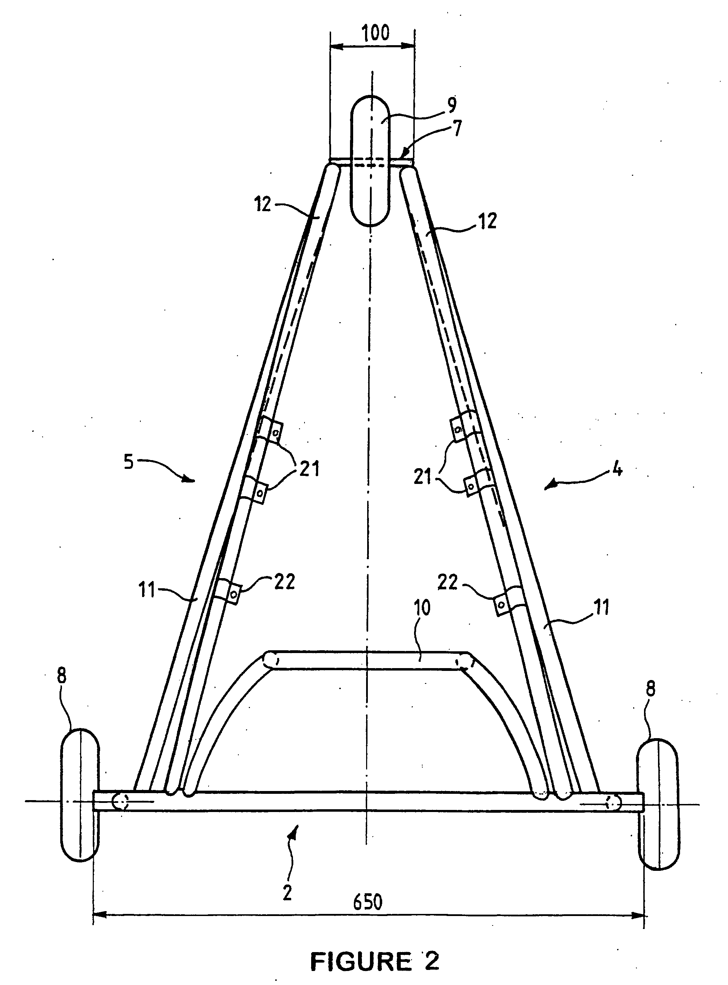

Sur la figure 2, la nacelle 1 vue de dessus présente une structure essentiellement symétrique. La roue avant 9 est disposée symétriquement dans le sommet 7 et déborde afin d'assurer un effet amortisseur en cas d'arrivée brutale.

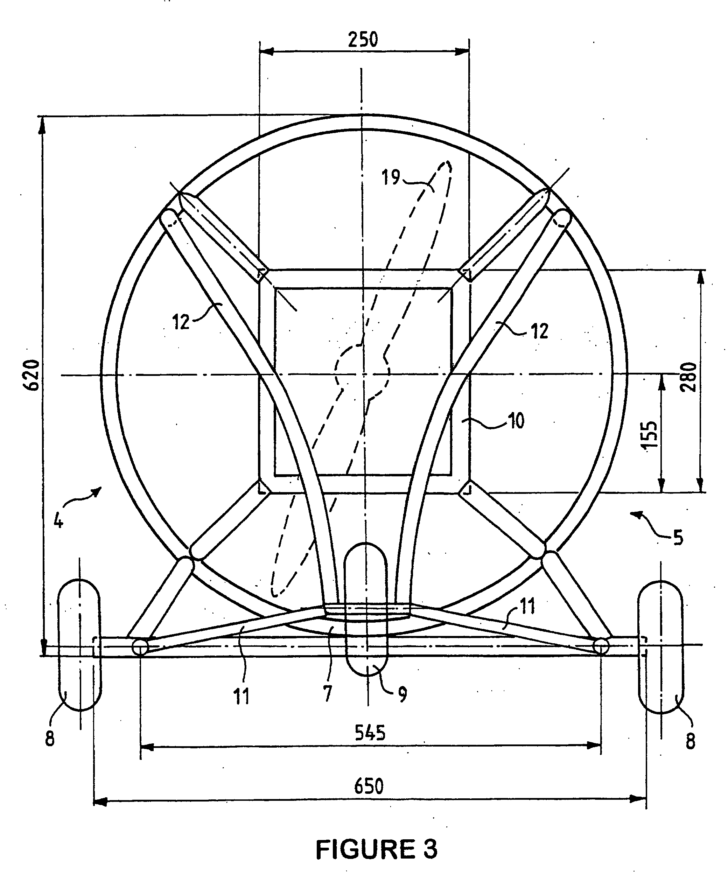

Sur la figure 3, la nacelle 1 vue de face présente une structure essentiellement symétrique.

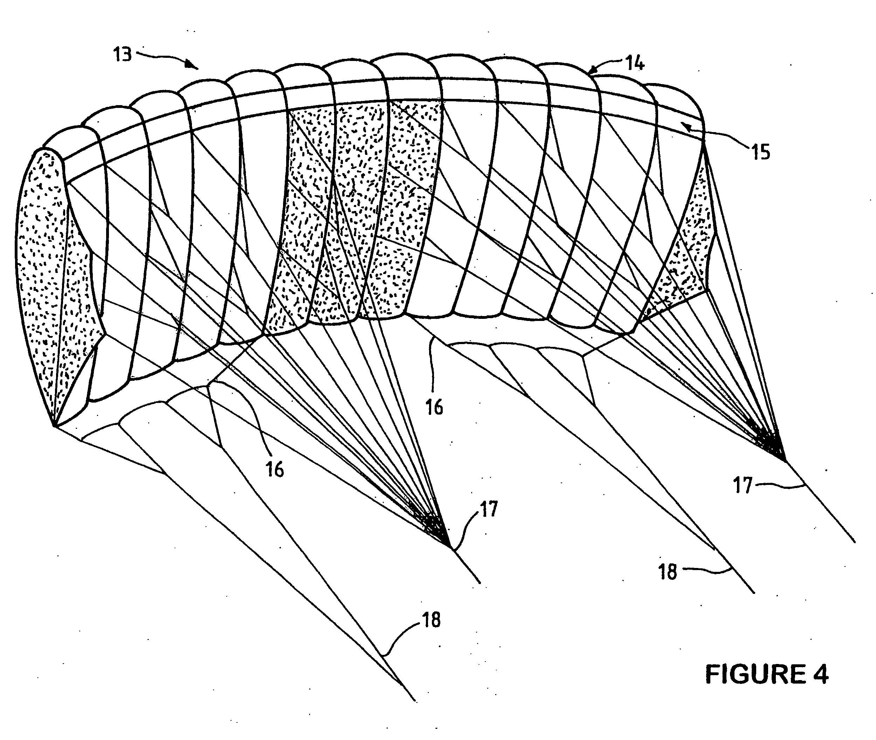

Sur la figure 4, la voilure 13 présente un bord d'attaque 14 avec une écope 15, ainsi que des volets/ailerons 16, ces volets/ailerons jouent alors le rôle habituel des bordures arrière. La voilure 13 est maintenue par deux suspentes avant 17 et le contrôle dynamique est obtenu par deux suspentes freins 18 agissant sur les bordures arrière ou, s'il y en a, sur les volets/ailerons 16.

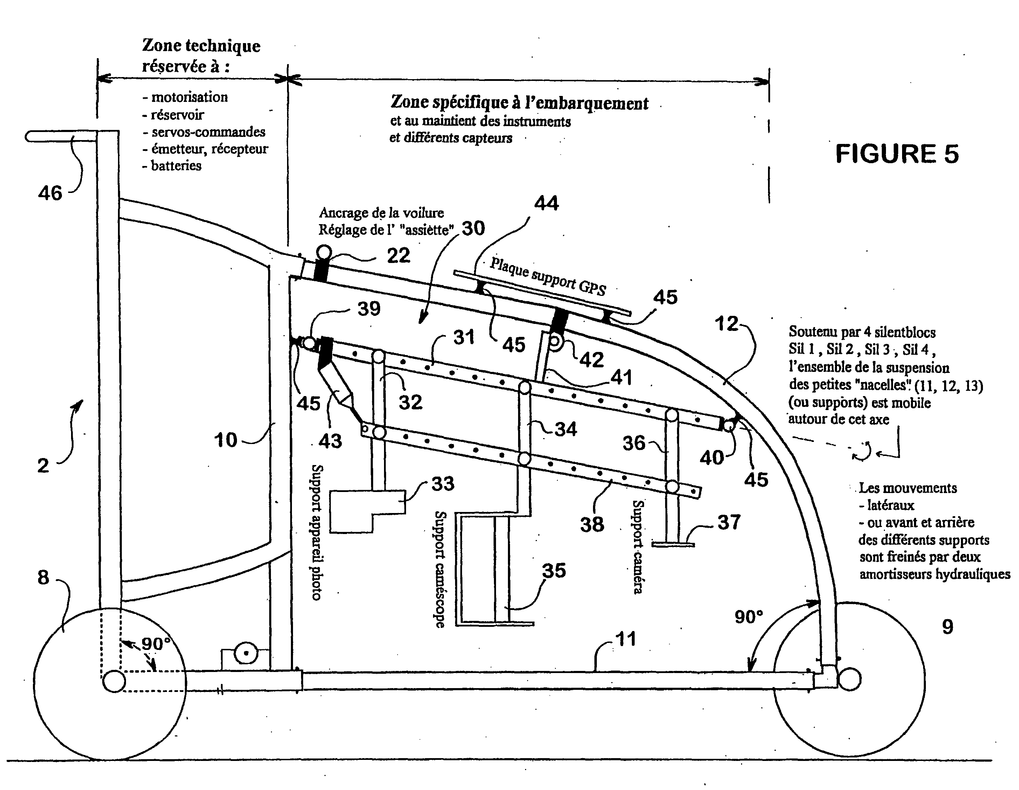

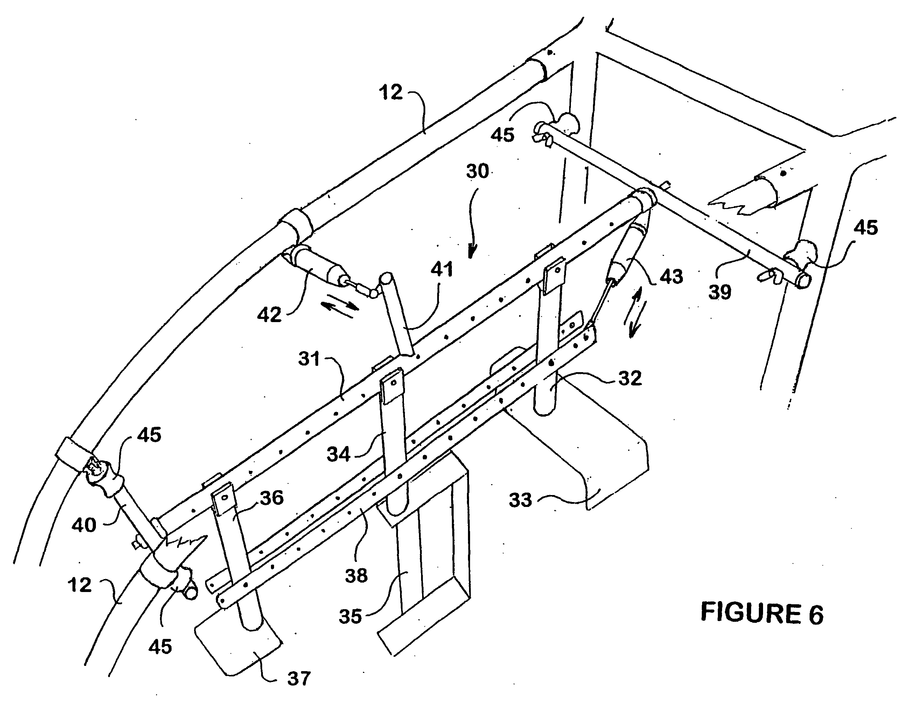

Un autre exemple de mise en oeuvre de l'invention représenté aux figures 5 et 6 permet de disposer d'un volume de matériel embarquable plus important que dans le premier exemple grâce à un cintrage des longerons supérieurs plus important. L'angle formé à l'avant entre les origines des longerons supérieurs et inférieurs est dans le premier cas, figure 1 de 60°, et dans le second cas, figure 5 de 90°. De même, les longerons inférieurs dans le premier cas sont droits, figure 2, et dans le second cas, ils sont cintrés dans un plan horizontal afin d'augmenter la surface limitée par les deux longerons inférieurs et à travers laquelle la télédétection est effectuée. Par ailleurs, sur la figure 5, le montage des longerons supérieurs sur la base de la nacelle est également modifié afin de disposer d'un plus grand volume pour la motorisation, l'équipement radioélectrique et autres accessoires. Les servo-treuils d'actionnement des suspentes freins sont disposés vers la partie basse de la base de la nacelle. Afin de faciliter les manipulations, une poignée butée est fixée en arrière et en haut de la base de la nacelle.

La figure 5 détaille également la fixation 30 de matériel qui est du type pendulaire à amortissement des mouvements antéro-postérieurs et latéraux. La fixation de matériel met en oeuvre un premier tube support 31 antéro-postérieur monté mobile en rotation autour de son axe à chacune de ses deux extrémités sur un support transversal 39, 40 fixé sur les longerons supérieurs 12 et la base, la rotation du premier tube support étant amortie par un bras de levier 41 et un premier amortisseur hydraulique 42 solidaire d'un longeron. Les supports transversaux sont fixés sur la nacelle par l'intermédiaire d'amortisseurs du type silentblocs 45. Trois éléments de matériel, un appareil de photographie, un caméscope, une caméra sont suspendus sur des supports 33, 35, 37, chacun par un tube de suspension 32, 34, 36 monté à fourche et pendulaire sur le premier tube support 31. En pratique, entre 1 et 5 éléments de matériel peuvent être embarqués. Un moyen de fixation amovible du tube de suspension ou de l'élément sur le tube de suspension est mis en oeuvre afin de permettre le transport ou non de l'élément en fonction de la mission du vol. Les éléments pouvant ou non être transportés et donc la charge et la répartition de charge de l'appareil volant pouvant être modifiée, la fixation de voilure par les suspentes avant se fait par des fixations coulissantes 22 permettant le réglage de l'assiette. Une plaque 44 pour supporter des moyens de positionnement GPS est fixée sur la nacelle par silentblocs. Les pendules formés par les tubes de suspension 32, 34, 36 sont amortis par un second amortisseur hydraulique 43 solidaire du premier tube support 31, un bras de liaison 38 articulé, un double bras, ou bien un bras composé de deux profilés ou plaques perforées relie les tubes de suspension au second amortisseur afin de réaliser des quadrilatères plans déformables du type parallélogramme. Le premier tube support et le bras de liaison comportent des orifices de montage disposés sur leurs longueurs afin de pouvoir sélectionner la position de montage de la fourche du tube de suspension le long dudit premier tube support et la position de l'articulation au tube de suspension le long dudit bras de liaison.

La figure 6 détaille la fixation de matériel et, en particulier, le bras de liaison 38 qui est formé de deux barres à section rectangulaire articulées de part et d'autre des tubes de suspension. Dans certaines de ses versions, l'appareil a permis des vols pour une masse totale maximale de 12 kg pour une voilure de 3,8 m² et une masse à vide maximale de 8 kg réservoir plein. La limite en poids maximal correspond à une réglementation nationale.

Les différences entre les deux exemples d'appareils qui ont été décrits sont en ce qui concerne l'avant :
- les longerons supérieurs sont allongés et présentent une courbure nettement pius accentuée afin d'augmenter la hauteur utile à l'intérieur de la structure ;
- l'angle formé près de la roue avant entre les longerons supérieurs et inférieurs passe de 60° à 90°;
- l'angle formé près des roues arrière entre les longerons inférieurs et le carter d'hélice est un angle droit ;
- les longerons inférieurs qui étaient rectilignes sont allongés et présentent une courbure (sur le plan horizontal) afin de libérer un espace élargi dans le plan inférieur de la structure et ainsi ouvrir l'angle possible de prise de vue des différents appareils et capteurs.

En ce qui concerne l'arrière :
- deux entretoises renforcent la structure,
- les points d'attache des servo-treuils abaissés jusqu'au niveau de la base de la structure (niveau des longerons inférieurs) afin d'augmenter le débattement utile de traction sur les suspentes de frein de voilure,
- une poignée de butée est ajoutée sur la partie haute de l'arceau afin d'éloigner l'hélice du sol lorsque l'appareil est posé sur sa "base" (nez en l'air).

L'ensemble d'éléments de suspension et de maintien des appareils ou capteurs embarqués permet de :
- les isoler des vibrations causées par le moteur,
- d'assurer leur mise en place et accrochage,
- les rendre solidaires dans leur mouvements, afin que les visées de chaque capteur soient identiques,
- d'assurer leur maintien en position de visée à la verticale sous l'appareil par simple effet de gravité,
- d'amortir les mouvements générés par les turbulences aériennes sur l'appareil.

Les éléments de suspension et de maintien des appareils et capteurs embarqués sur l'aéronef sont ainsi composés de :
- deux tubes transversaux en ZICRAL, reliés à la structure de l'appareil chacun par deux silentblocs en extrémités, ils sont maintenus par des écrous papillons, les deux tubes sont perforés au centre pour recevoir un axe,
- un tube central en ZICRAL, perforé tous les 25 mm sur un même plan, avec manchons de Téflon® à chaque extrémité permettant de recevoir un axe avec écrous NYLSTOP,
- la rotation du tube est limitée par la présence d'un amortisseur hydraulique. Ce dernier est relié au longeron supérieur de la structure par un collier avec vis et écrous à frein et au tube central par un petit bras de levier en ZICRAL et une rotule. Les caractéristiques de l'amortisseur déterminent l'angle de rotation possible du tube central ainsi que la friction ou résistance au mouvement,
- les deux pièces de liaison sont perforées à chaque 25 mm, elles sont placées de part et d'autre des supports et les maintiennent solidaires dans leurs mouvements,
- les mouvements avant et arrière (par rapport à la structure de l'appareil) sont limités en course et en friction par un second amortisseur hydraulique,
- l'amortisseur hydraulique est relié à la pièce de liaison par une rotule et au tube central par un collier et vis + écrou NYLSTOP.
- chaque support individuel est traversé par deux vis + écrous NYLSTOP servant d'axes, ils sont légèrement serrés mais sans jeu afin de permettre les mouvements des nacelles ; par effet de gravité leurs poids associés à celui des appareils et caméras auront tendance à les ramener constamment en position de visée verticale.

L'appareil présente une sécurité optimale vis-à-vis du matériel embarqué, la voilure du type parachute ralentissant considérablement la descente au cas où le moyen de propulsion viendrait à tomber en panne et/ou au cas où la télécommande deviendrait non opérationnelle. Par ailleurs, la disposition des roues aux trois angles du plan inférieur ainsi que la forme générale pyramidale englobant le moteur et autres ainsi que le matériel de télédétection assurent une protection en cas de choc.

## Revendications

1. Appareil volant radiocommandé de taille réduite propulsé par un moteur thermique (20) à hélice (19) propulsive pour transport et utilisation de matériel de télédétection, ledit appareil comportant une nacelle et une voilure permettant un décollage et un atterrissage courts par roulage au sol et permettant un vol à une vitesse maximale de 35 Km/h, la voilure (13) étant un parachute souple à caisson comportant un bord d'attaque (14) avec écope (15) et des bordures arrière, ladite voilure étant reliée à la nacelle par deux suspentes avant (17), deux suspentes freins (18) agissant sur les bordures arrière, **caractérisé en ce que** la nacelle (1) est un chariot tricycle rigide de gabarit approximativement pyramidal à base (2) arrière et sommet (7) avant, plan inférieur (3), deux plans latéraux (4, 5) et un plan supérieur (6), la base étant un élément monobloc soudé et comportant le moteur, l'hélice, un réservoir et la radiocommande, le sommet étant un élément monobloc soudé, le plan inférieur et les deux plans latéraux comportant des longerons (11, 12) au moins assemblés à la base et au sommet, le plan inférieur comportant à ses trois angles d'extrémités deux roues arrière (8) et une roue avant (9), la roue avant étant disposée débordante vers l'avant dans le sommet et les roues étant des pneumatiques basse pression, la nacelle étant désassemblable par désemboîtement pour permettre le transport dudit appareil sous un volume réduit, en arrière la base pouvant être désolidarisée des longerons et en avant les longerons pouvant être désolidarisés du sommet et les roues étant démontables, et **en ce que** chacun des plan latéraux comporte un longeron supérieur, ledit longeron étant courbé sensiblement vers son extrémité antérieure et comportant une fixation de voilure (22) par suspente avant et au moins une fixation de matériel (30), la fixation de voilure étant coulissante pour permettre la variation de l'assiette de l'appareil en fonction du matériel transporté.

2. Appareil selon la revendication 1, **caractérisé en ce qu'** au moins les longerons sont en ZICRAL®.

3. Appareil selon l'une quelconque des revendications précédentes, **caractérisé en ce que** l'assemblage est réalisé par boulons et écrous papillons comportant un moyen de freinage NYLSTOP®.

4. Appareil selon l'une quelconque des revendications précédentes, **caractérisé en ce que** la voilure est reliée à la nacelle par les deux suspentes avant d'une manière amovible rapide.

5. Appareil selon l'une quelconque des revendications précédentes, **caractérisé en ce que** le moteur est un moteur 2 temps de cylindrée comprise entre 10 et 50 cm³.

6. Appareil selon l'une quelconque des revendications précédentes, **caractérisé en ce que** l'hélice est bipale et a un diamètre compris entre 30 et 50 cm.

7. Appareil selon l'une quelconque des revendications précédentes, **caractérisé en ce que** l'hélice est disposée dans un carter de protection.

8. Appareil selon l'une quelconque des revendications précédentes, **caractérisé en ce que** la voilure à une surface comprise entre 2 et 6 m².

9. Appareil selon l'une quelconque des revendications précédentes, **caractérisé par** les paramètres approximatifs suivants :
masse totale maximale de 5,5 kg pour une voilure de 2,4 m² et de 7 kg pour une voilure de 3,8 m² ;
masse à vide maximale de 4,8 kg réservoir plein ;
roues de diamètre 150 mm ;
gabarit de la cellule : hauteur à la base 620 mm, largeur à la base 650 mm, distance base sommet 750 mm ;
le moteur est un moteur 2 temps de 23 cm³ à allumage électronique et démarrage manuel par lanceur à corde avec carburateur à membrane et à admission à clapet par le carter.

10. Appareil selon l'une quelconque des revendications précédentes, **caractérisé en ce que** la radiocommande comporte au moins une commande de gaz agissant sur la vitesse du moteur et deux commandes treuil agissant sur les deux suspentes freins.

11. Appareil selon l'une quelconque des revendications précédentes, **caractérisé en ce que** la fixation de matériel (30) est du type pendulaire à amortissement des mouvements antéro-postérieurs et latéraux, la fixation de matériel comportant un premier tube support (31) antéro-postérieur monté mobile en rotation autour de son axe à chacune de ses deux extrémités sur un support transversal (39, 40) solidaire de la nacelle, la rotation du premier tube support étant amortie par un premier amortisseur hydraulique (42) solidaire d'un longeron, au moins un élément de matériel étant suspendu par un tube de suspension (32, 34, 36) monté à fourche et pendulaire sur le premier tube support, le pendule formé par le tube de suspension étant en outre amorti par un second amortisseur hydraulique (43) solidaire du premier tube support.

## Patentansprüche

1. Funkgesteuertes Luftfahrzeug von kleiner Baugröße, das durch durch einen thermischen Motor (20) mit Schubpropeller (19) zum Transport und zur Nutzung von Fernerfassungsmaterial angetrieben wird, wobei das Luftfahrzeug eine Gondel und einen Tragflügel, der ein kurzes Starten und Landen durch Rollen auf dem Boden und einen Flug mit einer Höchstgeschwindigkeit von 35 km/h ermöglicht, wobei der Tragflügel (13) ein flexibler, kastenförmiger Fallschirm ist, der eine Vorderkante (14) mit einer Auftriebsausbildung (15) hat, und Hinterränder aufweist, wobei der Tragflügel mit der Gondel über zwei vordere Fangleinen (17) verbunden ist, wobei zwei Bremsleinen (18) auf die Hinterränder wirken, **dadurch gekennzeichnet, dass** die Gondel (1) ein steifer Dreiradwagen in einer Form ist, die mit dem hinteren Teil an der Basis (2) und dem vorderen Teil an der Spitze (7), einer unteren Ebene (3), zwei seitlichen Ebenen (4, 5) und einer oberen Ebene (6) annähernd eine Pyramidenform bildet, dass die Basis ein geschweißtes Monoblockteil ist und den Motor, den Propeller, einen Tank und die Funksteuerung umfasst, dass die Spitze ein geschweißtes Monoblockteil ist, dass die untere Ebene und die beiden seitlichen Ebenen Längsträger (11, 12) aufweisen, die zumindest an der Basis und an der Spitze zusammengefügt sind, dass die untere Ebene an ihren drei äußeren Winkeln zwei Hinterräder (8) und ein Vorderrad (9) aufweist, wobei das Vorderrad an der Spitze nach vorne vorstehend angeordnet ist und die Räder pneumatische Räder mit niedrigem Druck sind, dass die Gondel durch Auseinanderstecken demontiert werden kann, um den Transport des Luftfahrzeuges in kleinem Volumen zu ermöglichen, wobei die Basis hinten von den Längsträgern getrennt werden kann und die Längsträger vorne von der Spitze getrennt werden können und die Räder abnehmbar sind, und dadurch, dass jede der seitlichen Ebenen einen oberen Längsträger aufweist, dass der Längsträger zu seinem vorderen Ende hin wesentlich gekrümmt ist und eine Tragflügelbefestigung (22) für eine vordere Fangleine und mindestens eine Materialbefestigung (30) aufweist, und dass die Tragflügelbefestigung gleitend ist, um je nach Art des transportierten Materials eine Veränderung des Sitzes des Luftfahrzeuges zu ermöglichen.

2. Luftfahrzeug nach Anspruch 1, **dadurch gekennzeichnet, dass** mindestens die Längsträger aus ZICRAL® bestehen.

3. Luftfahrzeug nach einem der vorstehenden Ansprüche, **dadurch gekennzeichnet, dass** der Zusammenbau durch Schrauben und Flügelmuttern erfolgt, welche ein Bremsmittel NYLSTOP® aufweisen.

4. Luftfahrzeug nach einem der vorstehenden Ansprüche, **dadurch gekennzeichnet, dass** der Tragflügel über die zwei vorderen Fangleinen in schnell abnehmbarer Weise mit der Gondel verbunden ist.

5. Luftfahrzeug nach einem der vorstehenden Ansprüche, **dadurch gekennzeichnet, dass** der Motor ein Zweitaktmotor mit einem Hubraum zwischen 10 und 50 cm³ ist.

6. Luftfahrzeug nach einem der vorstehenden Ansprüche, **dadurch gekennzeichnet, dass** Propeller ein Zweiblatt-Propeller ist und einen Durchmesser zwischen 30 und 50 cm aufweist.

7. Luftfahrzeug nach einem der vorstehenden Ansprüche, **dadurch gekennzeichnet, dass** der Propeller in einem Schutzgehäuse angeordnet ist.

8. Luftfahrzeug nach einem der vorstehenden Ansprüche, **dadurch gekennzeichnet, dass** der Tragflügel eine Oberfläche zwischen 2 und 6 m² aufweist.

9. Luftfahrzeug nach einem der vorstehenden Ansprüche, **gekennzeichnet durch** folgende nähere Parameter:
maximales Gesamtgewicht von 5,5 kg für einen Tragflügel von 2,4 m² und 7 kg für einen Tragflügel von 3,8 m²;
maximales Leergewicht von 4,8 kg bei vollem Tank;
Räder mit einem Durchmesser von 150 mm;
Maße der Zelle (Dreiradwagens): Höhe bei der Basis 620 mm, Breite bei der Basis 650 mm. Distanz zwischen Basis und Spitze 750 mm;
der Motor ist ein Zweitaktmotor mit 23 cm³ und elektronischer Zündung und manuellem Start **durch** Schnuranlasser mit Membranvergaser und Ventileinlass **durch** das Gehäuse.

10. Luftfahrzeug nach einem der vorstehenden Ansprüche, **dadurch gekennzeichnet, dass** die Funksteuerung mindestens eine Gassteuerung, die auf die Geschwindigkeit des Motors wirkt, und zwei Windensteuerungen, die auf die zwei Bremsleinen wirken, umfasst.

11. Luftfahrzeug nach einem der vorstehenden Ansprüche, **dadurch gekennzeichnet, dass** die Materialbefestigung (30) von pendelnder Art mit Dämpfung der vorwärts-rückwärts gerichteten und der seitlichen Bewegungen ist, dass die Materialbefestigung einen ersten vorwärts-rückwärts vertaufenden Rohrträger (31), der um seine Achse an jedem seiner beiden Enden an einem Querträger (39, 40) drehbeweglich befestigt ist, der mit der Gondel fest verbunden ist, aufweist, dass die Schwenkung des ersten Rohrträgers durch einen ersten Hydraulik-Dämpfer (42) gedämpft wird, der mit einem Längsträger fest verbunden ist, dass mindestens ein Materialelement über ein Aufhängerohr (32, 34, 36) aufgehängt ist, das gabelförmig und schwenkend an dem ersten Rohrträger befestigt ist, und dass das Pendel, das durch das Aufhängerohr gebildet ist, des weiteren durch einen zweiten Hydraulik-Dämpfer (43) gedämpft wird, der mit dem ersten Rohrträger fest verbunden ist.

## Claims

1. A small-sized radio controlled flying device propelled by a thermal engine (20) with pusher type airscrew (19) for the transport and use of remote sensing equipment, said device comprising a pod and a wing unit enabling short take-off and landing by taxiing and enabling to fly at maximum speed of 35 Km/h, the wing (13) being a supple caisson-type parachute comprising a leading edge (14) with scoop (15) and rear edgings, said wing being connected to the pod by two front slings (17), two braking slings (18) acting on the rear edgings, **characterised in that** the pod (1) is a rigid tricycle carriage of substantially pyramidal jig with rear base (2) and front apex (7), lower plane (3), two lateral planes (4, 5) and an upper plane (6), the base being a welded one-piece element and comprising the engine, the airscrew, a tank and the remote control, the apex being a welded one-piece element, the lower plane and the two lateral planes comprising longerons (11, 12) at least assembled at the base and at the apex, the lower plane comprising at its three end angles two rear wheels (8) and a front wheel (9), the front wheel being provided to protrude towards the front in the apex and the wheels being low pressure tyres, the pod being dismountable by disengagement to enable the transport of said device under a reduced volume, whereas at the rear the base can be disconnected from the longerons and at the front the longerons can be disconnected from the apex and the wheels being dismountable, and **in that** each of the lateral planes comprises an upper longeron, said longeron being cambered substantially towards its front end and comprising a wing attachment (22) by front sling and at least one equipment attachment (30), the wing attachment being sliding to enable the variation of the balance of the flying device in relation to the equipment transported.

2. A flying device according to claim 1, **characterised in that** at least the longerons are made of ZICRAL®.

3. A flying device according to any one of the previous claims, **characterised in that** the assembly is provided by bolts and wing nuts comprising a braking means NYLSTOP®.

4. A flying device according to any one of the previous claims, **characterised in that** the wing is connected to the pod by both quick-release front slings.

5. A flying device according to any one of the previous claims, **characterised in that** the engine is a 2-stroke engine with a cubic capacity ranging between 10 and 50 cm³.

6. A flying device according to any one of the previous claims, **characterised in that** the airscrew is two-blade and has a diameter ranging between 30 and 50 cm.

7. A flying device according to any one of the previous claims, **characterised in that** the airscrew is provided in a protection casing.

8. A flying device according to any one of the previous claims, **characterised in that** the wings have a surface ranging between 2 and 6 m².

9. A flying device according to any one of the previous claims, **characterised by** the following approximate parameters:
5.5 kg maximum total mass for 2.4 m² wing and 7 kg for 3.8 m² wing;
4.8 kg maximum empty mass with full tank;
wheels with 150 mm diameter;
jig of the cell: height at the base 620 mm, width at the base 650 mm, base/apex distance 750 mm;
the engine is a 2-stroke engine with cubic capacity of 23 cm³ with electronic ignition and manual start by cord launcher with membrane carburettor and valve admission through the casing.

10. A flying device according to any one of the previous claims, **characterised in that** the radio control comprises at least a gas throttle acting on the speed of the engine and two winch controls acting on the two braking slings.

11. A flying device according to any one of the previous claims, **characterised in that** the equipment attachment (30) is pendulum type with shock-absorption of the front-rear and lateral movements, the equipment attachment comprising a first supporting front-rear tube (31) mounted mobile in rotation around its axis at each of both its ends on a transversal support (39, 40) integral with the pod, the rotation of the first supporting tube being absorbed by a first hydraulic shock-absorber (42) integral with a longeron, at least one piece of equipment being suspended from a suspension tube (32, 34, 36) fork-mounted and pendular on the first supporting tube, the pendulum formed by the suspension tube being moreover absorbed by a second hydraulic shock-absorber (43) integral with the first supporting tube.
